# DEMANDE DE BREVET EUROPEEN

(11) **EP 4 834 071 A1**
(43) Date de publication de la demande: **04.11.2026**
(21) Numéro de dépôt: 26169968.0
(22) Date de dépôt: 31.03.2026
(51) Int. Cl.: A01B 69/04

(54) **PROCÉDÉ D ÉLABORATION D'UN ARPENTAGE D'UNE PARCELLE DE RANGS DE VÉGÉTATION, SYSTÈME ET PROCÉDÉ DE GUIDAGE D'UN ENGIN AUTONOME À BASE D'UN ARPENTAGE**

(30) Priorité: 30.04.2025 FR 2504622
(71) Demandeur: Exel Industries, 51200 Epernay (FR)
(72) Inventeur: SCHULSTER, Alex, 51200 EPERNAY (FR)
(74) Mandataire: Bandpay & Greuter

(57) **Abrégé**

Système et **procédé** d'élaboration d'un arpentage fin d'une parcelle (99) de rangs de végétation (VG), comprenant :
A- acquisition d'un arpentage préliminaire (ARP1), comprenant une désignation de points cartographiques depuis des données cartographiques, et en déduire des premières données d'arpentage (21a, 21b) à des fins de guidage,
B- une étape de parcours, dans laquelle on fait parcourir, sur la base des premières données d'arpentage, les rangs de la parcelle par un engin autonome (2) équipé d'un capteur de géolocalisation (5) et d'un capteur de détection de rang (7) permettant de déterminer une localisation réelle d'un rang par rapport à l'engin, une position de passage affinée étant construite par projection de la géo-position courante du capteur de géolocalisation (**PRB)** sur la ligne centrale du rang,
C- déterminer, à partir des points de passages affinés (11a,11b) des deuxièmes données d'arpentage formant un arpentage fin (ARP2) à des fins de travail de précision.

## Description

### DOMAINE TECHNIQUE

La présente invention concerne le domaine des engins agricoles autonomes qui peuvent réaliser certains travaux dans des parcelles de rangs de végétation sur la base d'un arpentage préalable.

On entend ici par « arpentage » un ensemble d'informations permettant de connaître la position des rangs de vigne (ou plus généralement de rangs de végétation) dans un système de géolocalisation. Ainsi, un arpentage d'une parcelle de rang de végétation peut contenir les positions géolocalisées, pour chaque rang, d'un point de début de rang et d'un point de fin de rang, avec le cas échéant des points de passage notamment dans la situation où le rang n'est pas rectiligne, sans exclure d'y inclure la position de chaque pied ou chaque plant.

L'obtention d'un tel arpentage permet à un engin autonome de type machine agricole robotisée de réaliser divers travaux viticoles, arboricoles ou agricoles, en particulier afin de pouvoir réaliser des travaux dans la parcelle sans assistance permanente d'un conducteur humain.

Un arpentage d'une bonne précision permet d'envisager la réalisation de travaux précis, notamment au pied des rangs de végétation, par exemple du désherbage au voisinage des ceps de vigne.

On cherche de plus en plus à automatiser certains travaux dans les vergers et les vignes, d'où l'intérêt d'avoir à disposition un arpentage de chaque parcelle de rang de vigne ou de rang d'arbustes/arbres.

Les machines agricoles visées sont des machines robotisées à guidage autonome notamment dans la viticulture, par exemple un enjambeur viticole. L'invention peut aussi être mise en œuvre dans le cadre de l'utilisation d'autres types de machines agricoles à guidage autonome. Les machines robotisées peuvent être portées par des roues, sans exclure le cas des chenilles.

### ETAT DE LA TECHNIQUE

Une pratique d'arpentage connue est de procéder à un relevé topographique avec géolocalisation des positions des bouts de rang grâce à un récepteur GPS monté sur une canne qu'un opérateur place successivement aux endroits à relever, en validant le point et en procédant de proche en proche pour couvrir tous les rangs de la parcelle. De plus, si le rang présente une courbure, il est aussi nécessaire de relever des points intermédiaires sur le tracé du rang.

Ce procédé s'avère long et fastidieux pour des parcelles de taille moyenne et encore plus pour de grandes parcelles.

Par ailleurs, il a été proposé des solutions pour faire évoluer un tracteur autonome dans un verger, notamment dans des circonstances où les signaux GPS sont masqués par la présence de feuillages en hauteur, comme par exemple selon les documents WO2024135018, US2020029488 ou US2024241518.

Il demeure par conséquent un besoin d'obtenir un arpentage précis de manière plus rapide et moins coûteuse. C'est dans ce contexte que les présents inventeurs ont proposé le procédé qui va être présenté maintenant.

### PRESENTATION DE L'INVENTION

Dans ce contexte, la présente invention a pour objet un procédé d'élaboration d'un arpentage fin d'une parcelle plantée d'une pluralité de rangs de végétation (e.g. dans une vigne, un verger ou autre), le procédé comprenant :
A- une étape d'acquisition d'un arpentage préliminaire à partir d'un appareil numérique, comprenant une désignation de points cartographiques depuis des données cartographiques (par exemple moyennant un accès à une base cartographique), et en déduire, directement ou indirectement, des **premières données d'arpentage** à des fins de guidage, les premières données d'arpentage comprenant, pour chaque rang, une première position (21a) relative à une première extrémité de rang (PE1), et une deuxième position (21b) relative à une deuxième extrémité de rang (PE2),
B- une étape de parcours, dans laquelle on fait parcourir, sur la base des premières données d'arpentage, tous les rangs de la parcelle par un engin autonome de préférence un engin enjambeur, équipé d'un capteur de géolocalisation (GPS/GNSS) faisant partie d'un système de géolocalisation à précision centimétrique, et d'au moins un capteur de détection de rang permettant de déterminer une localisation réelle d'une ligne centrale (LC) de rang par rapport à l'engin, le capteur de géolocalisation étant de préférence agencé sur un plan médian longitudinal de l'engin autonome,
   l'étape de parcours comprenant itérativement :
   - relever une **géo-position** courante du capteur de géolocalisation (5), et simultanément déterminer une **position de la ligne centrale** (LC) par rapport à l'engin (PRB) et par rapport à son capteur de géolocalisation,
   - déterminer une **position géolocalisée courante projetée** (PCJ) sur la ligne centrale (LC) du rang, pour en déduire des **points de passages affinés et géolocalisés** du tracé du rang,
C- déterminer, à partir des points de passages affinés, un jeu de nouveaux points d'arpentage pour obtenir en sortie des **deuxièmes données** d'arpentage formant un arpentage fin de la parcelle à des fins de travail de précision,
   les deuxièmes données d'arpentage comprenant, pour chaque rang, au moins une première position affinée de la première extrémité de rang, une deuxième position affinée de la deuxième extrémité de rang.

Grâce à ces dispositions, en utilisant un engin à guidage autonome, et une étape d'arpentage préliminaire réalisée très rapidement sur un appareil informatique/numérique (par exemple ordinateur ou smartphone), et ensuite grâce au parcours et aux relevés des positions réelles (comme il sera vu en détails plus loin), on obtient avantageusement un arpentage précis de la parcelle, avec tous les rangs effectivement présents dans la parcelle et optionnellement le cas échéant les zones de demi-tour dans les bouts de rang.

En pratique, les premières données d'arpentage font partie d'un premier fichier d'arpentage, et les **deuxièmes** données d'arpentage font partie d'un **deuxième** fichier d'arpentage.

La position géolocalisée courante projetée est construite en projetant la géo-position courante du capteur de géolocalisation (PRB) sur la ligne centrale (LC) du rang, soit en prenant le point le plus proche sur la ligne centrale (LC) ou soit en projetant la géo-position courante du (PRB) perpendiculairement à la direction locale de ligne centrale (LC) du rang et en direction de la ligne centrale (LC).

Accessoirement, le procédé prévoit de déterminer un **écart latéral** (ΔL) de la géo-position du capteur de géolocalisation (5) par rapport à la ligne centrale (LC) du rang. L'écart latéral (ΔL) est considéré de préférence selon la direction transverse Y de l'engin.

Il faut remarquer que l'écart latéral (ΔL) entre la géo-position du capteur de géolocalisation et la ligne centrale (LC) du rang reste généralement petit, typiquement quelques centimètres ou quelques dizaines centimètres. Si la trajectoire de l'engin était parfaite par rapport au rang (cas théorique pas réaliste), ledit écart latéral (ΔL) serait nul (pour un capteur dans un plan médian de l'engin, c'est-à-dire au-dessus du rang).

Il faut aussi remarquer que les premières données cartographiques d'arpentage préliminaires, même si elles ne sont pas très précises, suffisent pour alimenter la fonction de guidage de l'engin autonome, la fonction de guidage pouvant alors se recaler au passage en temps réel par rapport à la position réelle de chaque rang captée par le capteur de détection de rang. Lors de l'étape de parcours (B-), on met avantageusement à profit l'utilisation continue du système de géolocalisation à précision centimétrique. On note que dans le cas d'un engin enjambeur, qui enjambe et surplombe le rang de végétation, la réception des signaux de géolocalisation n'est gênée par aucun feuillage ou autre obstacle (visibilité des satellites garantie sans interposition d'obstacle).

Dit autrement pour reformuler l'astuce de la présente invention, les premières données d'arpentage (qui ne sont pas nécessairement très précises) servent à la fonction de guidage de l'engin autonome pour qu'il puisse parcourir tous les rangs successivement un par un. C'est ensuite au cours de l'étape de parcours que les capteurs disponibles sur l'engin autonome permettent de procéder à un relevé sur place des positions géolocalisées réelles, ce qui permet d'établir les deuxièmes données d'arpentage formant l'arpentage fin de la parcelle.

Comme il sera discuté plus loin, le capteur de détection de rang peut prendre plusieurs formes, il peut s'agir par exemple d'un capteur lidar, mais il peut s'agir aussi d'un dispositif d'imagerie, sans exclure non plus des technologies de capteurs à ultrasons ou d'utiliser un capteur par contact physique. Le capteur de détection de rang peut détecter directement le rang par les contours de sa végétation ou par son empreinte au sol (plants, troncs, piquets de palissage,...).

Il faut noter que les données d'arpentage (premières et/ou deuxièmes) incluent pour chaque rang une première position relative à une première extrémité du rang, et une deuxième position relative à une deuxième extrémité du rang. En outre, les premières et/ou deuxièmes données d'arpentage comprennent aussi le plus souvent des points intermédiaires de passage («waypoints»). De plus, les données d'arpentage de la parcelle peuvent inclure aussi la délimitation d'une zone de travail limite qui englobe au moins la pluralité des rangs et les aires disponibles pour faire les demi-tours en bout de rang.

Dans certains cas avantageux, les premières données d'arpentage sont déduites indirectement des points cartographiques issus de la désignation de points, après une prise en compte éventuelle d'un recalage connu à partir de données de correction obtenues à partir d'un arpentage **fin** antérieur d'une parcelle **voisine.**

Dans d'autres cas standard, les premières données d'arpentage sont déduites directement des points cartographiques issus de la désignation de points, sans recalage particulier.

Il faut aussi remarquer que la ligne centrale du rang est déterminée à partir du (ou des) capteur(s) de détection de rangs, et en réalité la trajectoire du centre de l'engin autonome ne va pas coïncider tout le temps précisément avec la ligne centrale du rang en raison du roulement des roues de l'engin sur des irrégularités de la surface du terrain ou à cause de petits mouvements de glissage des roues au sol.

Ainsi il existe en pratique un écart latéral entre la position du capteur de géolocalisation et la ligne centrale du rang, et la boucle d'asservissement sur la trajectoire s'efforce de réduire en permanence l'écart constaté afin de suivre au mieux prévue la ligne centrale du rang déterminée par les données remontant du (ou des) capteur(s) de détection de rang. On peut aussi gérer cet écart latéral en prenant en compte un décentrage de la position du capteur de géolocalisation si ce dernier ne se trouve pas dans un plan médian de l'engin.

Dans le cas particulier d'un engin enjambeur, le récepteur de géolocalisation peut se trouver au centre, i.e. sur un plan médian longitudinal de l'engin et en pratique il peut se trouver généralement au-dessus de la ligne centrale du rang, l'écart latéral moyen est alors nul grâce au suivi de rang par les ou les capteur(s) de détection de rangs.

Selon un aspect du procédé proposé, la détermination de l'arpentage fin consiste à adopter les **nouveaux points** obtenus à partir des positions géolocalisées projetées sur la ligne centrale du rang, en ayant **oublié** les points d'arpentage contenus dans les premières données d'arpentage. Un processus parallèle permet tout de même d'enregistrer les différences entre les positions géolocalisées constatées et les positions correspondantes connues des premières données d'arpentage afin d'en faire bénéficier les processus d'arpentage ultérieurs des parcelles voisines. Dit autrement, le deuxième fichier d'arpentage remplace le premier fichier d'arpentage.

R2 Selon une réalisation, les première et deuxième données d'arpentage comprennent respectivement, pour chaque rang, une première position relative à une première extrémité de rang, une deuxième position relative à une deuxième extrémité de rang, et optionnellement un ou plusieurs points de passage PPi (i désigne ici un indice) à des positions intermédiaires sur le tracé du rang entre la première extrémité et la deuxième extrémité.

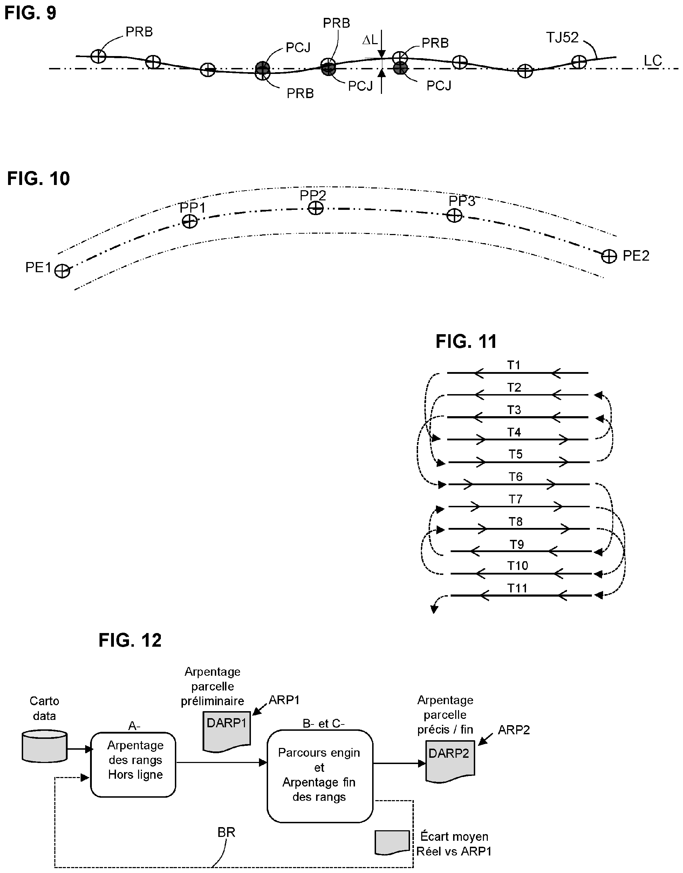

Dans des configurations où les rangs sont rectilignes, les données d'arpentage peuvent être simplifiées pour chaque rang et ne contenir que les deux points d'extrémité. Dans des configurations où les rangs ne sont pas rectilignes, comme par exemple celle illustrée à la figure 10, alors il est nécessaire de compléter les données d'arpentage précitées pour chaque rang avec un ou plusieurs point(s) de passage. Le guidage peut ensuite utiliser une interpolation basée sur lesdits points de passage pour construire la ligne centrale du rang à partir des points d'extrémité et des points de passage. L'interpolation en question peut être une interpolation linéaire ou être une interpolation polynomiale.

De plus, la première position peut être décalée de la position physique du début de végétation (e.g. premier cep) en raison de la présence d'un tirant de palissage. Bien entendu, il en est de même pour la deuxième position qui peut elle aussi être décalée similairement. Ceci permet de sécuriser les manœuvres de demi-tour de l'engin autonome. Accessoirement, ceci permet de sécuriser les manœuvres de demi-tour d'autres engins autonomes amenés à travailler sur la même parcelle, avec les mêmes deuxièmes données d'arpentage (arpentage fin).

R3 Selon une réalisation, les première et deuxième données d'arpentage comprennent une délimitation d'une zone de travail qui englobe la pluralité des rangs et définit une frontière extérieure d'évolution pour l'engin autonome.

Cette zone de travail délimitée permet par exemple d'éviter à l'engin autonome de verser dans un fossé de bordure ou de contacter un obstacle (arbre, poteau, ...). Cette zone de travail délimitée permet aussi d'éviter d'arpenter la parcelle voisine par erreur.

On remarque que cette zone de travail inclut une aire suffisante aux bouts des rangs pour que l'engin autonome puisse pratiquer des demi-tours qui lui permettent de rejoindre un rang suivant à partir d'un rang précédent dans son parcours. Bien entendu, les rangs sont parcourus dans un mode aller-retour, i.e. sans retour à vide.

R4 Selon une réalisation, lors de l'étape de parcours par l'engin autonome, on définit le cas échéant une ou plusieurs restrictions et/ou modifications de la zone de travail délimitant une frontière extérieure d'évolution pour l'engin autonome, par exemple en réponse à une détection d'obstacle.

Moyennant quoi, on peut réajuster la zone de travail au vu du réel.

R5 Selon une réalisation, le procédé peut comprendre en outre, pour chaque point d'arpentage de l'arpentage préliminaire, une comparaison de la position acquise en temps réel par rapport à une position estimée obtenue à partir des premières données d'arpentage.

En pratique, la différence obtenue permet d'établir des données de correction afin de pouvoir fournir une correction pour les arpentages à venir des parcelles voisines.

On peut utiliser une moyenne des corrections des premières données de guidage dont les points de bout de rang, des points de passage, des zones de demi-tour. Cette moyenne des corrections correspond à un offset général qui affecte toutes les positions.

R6 Selon une réalisation, lors de l'étape de parcours par l'engin autonome, deux rangs consécutivement parcourus ne sont pas physiquement adjacents.

En pratique, il y a au moins un rang entre deux rangs consécutivement parcourus ; dit autrement, le demi-tour 'saute' au moins un rang, comme illustré à la figure 11.

R7 Selon un autre aspect de l'invention, celle-ci vise un **système** d'élaboration d'un arpentage fin d'une parcelle de rangs de végétation, comprenant :
- un appareil numérique d'accès à une base cartographique, notamment de photos satellitaires, incluant par exemple un ordinateur ou un téléphone intelligent multifonction (i.e. un smartphone), un arpentage préliminaire pouvant être réalisé hors ligne à partir dudit appareil numérique,
- un engin autonome, de préférence un engin enjambeur, équipé d'un capteur de géolocalisation (GPS/GNSS) faisant partie d'un **système de géolocalisation** à précision **centimétrique,** et d'au moins un capteur de détection de rang,
   l'engin autonome comprenant au moins une unité de commande (par exemple couplée à un serveur distant ou à un appareil distant ou nomade) configurée pour :
- acquérir des premières données de guidage issues d'une étape préalable d'acquisition d'un arpentage préliminaire (ARP1) depuis l'appareil numérique (9) d'accès à une base cartographique, les premières données d'arpentage comprenant, pour chaque rang, une **première position** (21a) relative à une première extrémité de rang (PE1), une deuxième position (21b) relative à une deuxième extrémité de rang (PE2),
- collecter, en parcourant tous les rangs de la parcelle (99), des deuxièmes données d'arpentage issues de la détermination d'une ligne centrale du rang à partir du (ou des) capteur(s) de détection de rang, de la détermination simultanée de la géoposition courante du capteur de géolocalisation de l'engin (PRB),
   l'unité de commande étant configurée pour établir des deuxièmes données d'arpentage formant un arpentage fin, les deuxièmes données d'arpentage comprenant pour chaque rang, au moins une première position affinée de la première extrémité de rang, une deuxième position affinée de la deuxième extrémité de rang.

Les deuxièmes données d'arpentage sont issus de points de passages affinés, qui eux-mêmes sont obtenus par projection sur la **ligne centrale** des **géo-positions** successives du capteur de géolocalisation.

Grâce aux informations délivrées par le ou les capteur(s) de détection de rang, l'unité de commande peut déterminer un écart latéral de la position courante de l'engin par rapport à une ligne centrale du rang. A partir de cela, l'unité de commande construit une position géolocalisée courante projetée sur la ligne centrale du rang, pour en déduire un point de passage dit 'affiné' du tracé du rang. À partir des points de passage affinés, on obtient les deuxièmes données d'arpentage.

Selon une réalisation, lequel l'engin autonome est un engin automoteur enjambeur. Ce type d'engin est très utile pour les travaux viticoles.

Selon une réalisation, l'engin autonome présente un plan médian longitudinal (PML) et le capteur de géolocalisation (5) se trouve dans le plan médian longitudinal (PML) de l'engin. Il n'y a pas d'offset latéral à gérer, le capteur de géolocalisation se trouve « naturellement » exactement au dessus du rang de végétation. Le cas d'une inclinaison latérale induite par un dévers sera discuté en fin de description.

Selon une réalisation, le au moins un capteur détection de rang comprend un capteur Lidar. Ce type de capteur devient de plus en plus abordable et présente des performances très intéressantes pour la reconnaissance de formes, quel que soit le niveau d'éclairage ambiant. Pour mémoire, un lidar (télédétection par laser) est un terme maintenant couramment utilisé et issu de l'anglais 'Light Detection and Ranging'.

Selon une réalisation, le capteur de géolocalisation est configuré pour recevoir des signaux d'une ou plusieurs constellations de satellites incluant les constellations GPS, Glonass, Galileo et autre(s) systèmes similaire(s).

Selon une réalisation, le système fait appel à un système de géolocalisation à précision améliorée utilisant des correctifs de coordonnées dits GNSS DRTK. Moyennant quoi, on obtient une précision centimétrique pour l'arpentage fin. Le terme RTK est explicité plus loin.

Selon une réalisation, l'unité de commande est couplée via une liaison sans fil avec un serveur ou appareil distant gérant des données d'arpentage, et est couplée en liaison sans fil avec un serveur de données de correction de géolocalisation dite RTK.

Selon une réalisation, l'engin autonome peut être équipé de différents outils : disques émotteurs, système de pulvérisation, système de binage inter-ceps. Une grande variété de travaux peuvent être effectués grâce à l'arpentage fin obtenu par le procédé promu ici.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 montre un exemple de parcelle de rangs de vigne, comme un cliché de satellite extrait d'un logiciel de cartographie ;
La figure 2 montre la parcelle représentée à la figure 1 en semi-transparence, dans laquelle les rangs sont représentés avec en sus un relevé d'arpentage préliminaire réalisé grâce à une souris d'ordinateur ou à un pointage des points sur un écran tactile ;
La figure 3 montre plus en détail une portion d'un arpentage avec les croix des bouts de rangs correspondant aux points d'arpentage préliminaire issus des clics de souris ou des pointages sur écran tactile, et les ronds représentant les positions géolocalisées vraies des bouts de rangs relevés par l'engin autonome au passage de son parcours ;
La figure 4 montre un exemple d'équipement utilisé pour réaliser l'arpentage préliminaire hors ligne ;
La figure 5 représente un schéma bloc des éléments mis en jeu dans un engin autonome pour le guidage et le suivi de trajectoire ;
La figure 6 illustré une vue de dessus d'un exemple d'engin autonome utilisé pour la mise en œuvre du procédé promu ici ;
La figure 7 illustré une vue de face d'un exemple d'engin autonome utilisé pour la mise en œuvre du procédé promu ici ;
La figure 8 illustré une vue de côté d'un exemple d'engin autonome utilisé pour la mise en œuvre du procédé promu ici ;
La figure 9 montre un exemple de suivi de trajectoire réelle avec écart latéral asservissement en pilotage autour le ligne de trajectoire cible ;
La figure 10 montre un schéma d'arpentage dans le cadre d'un rang de végétation en courbe non rectiligne ;
La figure 11 montre un schéma d'un exemple de parcours de l'engin autonome dans la parcelle de rangs de végétation ;
La figure 12 montre un exemple de logigramme qui illustre le procédé selon la présente invention.

Il faut noter que les figures exposent l'invention de manière détaillée pour permettre de mettre en œuvre l'invention ; bien que non limitatives, lesdites figures servent notamment à mieux définir l'invention le cas échéant.

### DESCRIPTION DETAILLEE DE L'INVENTION

L'invention concerne les procédés d'élaboration des arpentages des parcelles de vignes ou de vergers (plus généralement des parcelles comprenant des rangs de végétation) dans l'optique de pouvoir faire travailler sur ces parcelles des engins à guidage autonome.

L'invention met à contribution un engin agricole **2.** Les caractéristiques de l'invention sont présentées dans la suite dans le cas particulier d'un tracteur de type enjambeur.

L'engin agricole est un engin à guidage autonome. L'engin agricole est équipé de quatre roues **W,** mais d'autres configurations ne sont pas exclues. L'engin agricole est équipé d'un capteur de géolocalisation **5** (on parle dans le métier de GPS ou GNSS), et d'au moins un capteur de détection de rang **7.** Les caractéristiques et fonctions de ces capteurs seront discutées plus loin.

S'agissant du repérage dans l'espace, la direction **X** correspond à la direction longitudinale de l'engin, e.g. sa direction de déplacement normale, la direction **Z** correspond à la direction verticale et la direction **Y** perpendiculaire aux deux précédentes et correspond à la direction transversale de l'engin.

Dans l'exemple illustré, l'engin autonome **2** est équipé d'un système de pulvérisation de produit sous forme liquide, le produit étant destiné à être projeté sous forme de gouttelettes sur une végétation cible **VG** par exemple des feuillages d'arbuste ou des feuillages de vignoble. Toutefois, l'engin autonome pourrait être destiné à réaliser d'autres travaux comme du désherbage au sol, de l'effeuillage, etc...

Le tracteur enjambeur comprend un châssis structurel généralement de forme rectangulaire, vu dans un plan horizontal. La longueur selon l'axe longitudinal **X** est substantiellement plus importante que la largeur selon l'axe transversal **Y,** car comme déjà évoqué dans la partie introductive la largeur **L1** du tracteur enjambeur doit rester limitée.

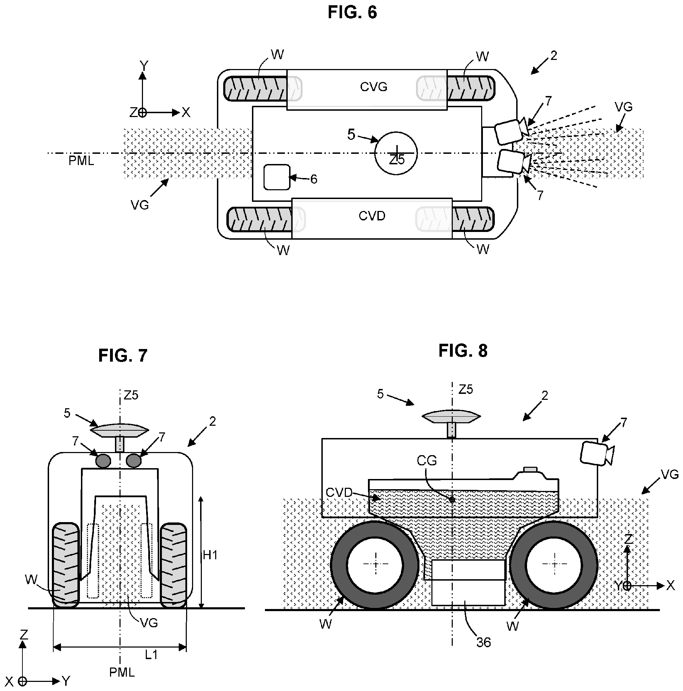

Le tracteur enjambeur passe au-dessus de la végétation du rang de végétation cible **VG.** Comme illustré à la figure 7, cette garde au sol **H1** est d'au moins 1 mètre, elle peut être comprise dans la pratique entre 1m et 1m50. La largeur **L1** hors tout peut être comprise entre 1,2 m et 1,6 m.

Le châssis embarque au moins une unité de motorisation, un groupe hydraulique et/ou un groupe pneumatique, divers systèmes de commande dont certains seront discutés en détail plus loin. L'unité de motorisation peut être électrique, avec une batterie et une machine électrique.

### Arpentage Préliminaire

Selon le procédé proposé, une première étape d'arpentage est réalisée sur des moyens informatiques dans un mode hors ligne, c'est-à-dire dans un lieu indépendant de la localisation de la parcelle cible.

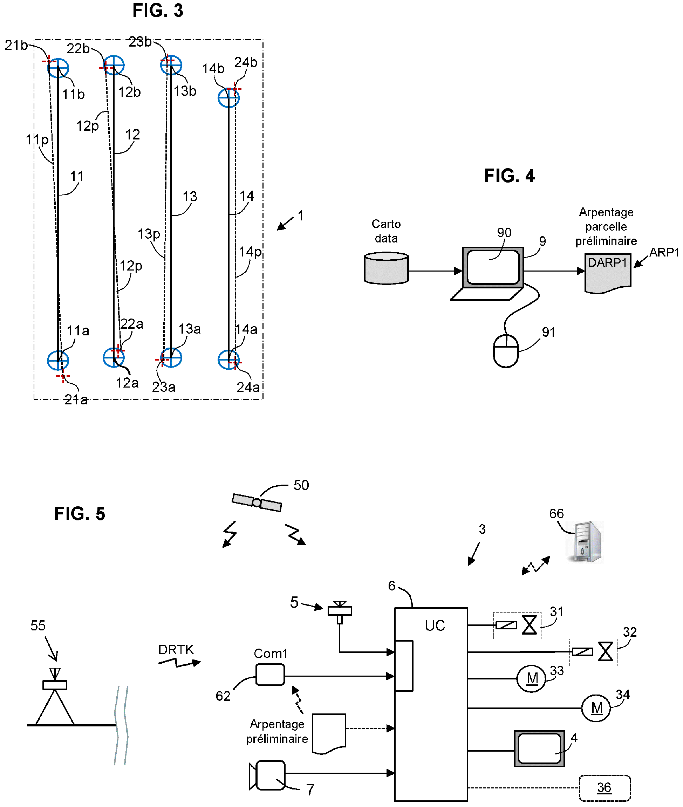

Comme illustré à la figure 4, cette étape d'arpentage préliminaire notée A- peut être réalisée sur un poste informatique de type ordinateur portable **9** disposant d'une connectivité au réseau internet. Dans d'autres exemples de réalisation cette étape d'arpentage préliminaire peut être réalisée sur un téléphone multifonction appelé dans le langage courant 'smartphone'.

Il n'est pas exclu de réaliser cette étape d'arpentage préliminaire en mode hors ligne à partir de cartes aériennes téléchargées préalablement.

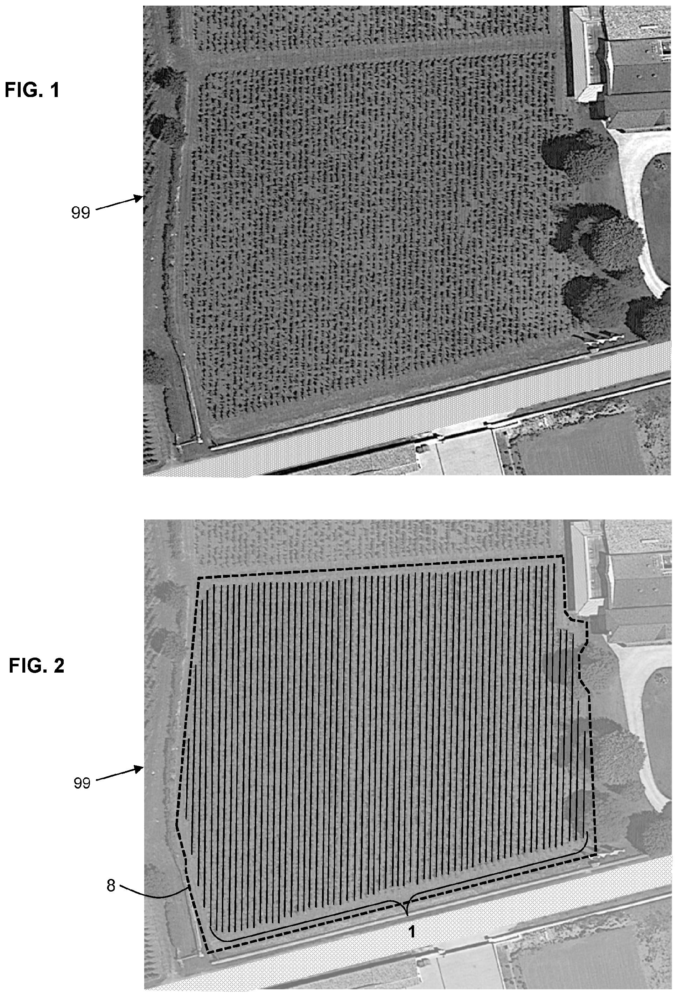

On choisit la parcelle cible pour laquelle on doit réaliser un arpentage précis, la figure 1 illustre une telle parcelle **99.** Ici dans l'exemple illustré, on trouve une soixantaine de rangs 1 qui sont rectilignes et parallèles les uns aux autres. On note toutefois que les longueurs sont différenciées, notamment sur les bords de parcelle.

Le procédé d'arpentage préliminaire consiste à pointer (on dit aussi désigner) chacune des deux extrémités de chaque rang en relevant les coordonnées géolocalisées.

Par coordonnée géolocalisée, il faut comprendre par exemple une position en latitude et longitude, exprimée en degré, minutes et seconde d'arc comme il est connu dans les systèmes de géolocalisation. Une expression en degrés décimaux est aussi possible.

On peut faire appel a une application telle que GoogleMaps^{™}, Mappy^{™}, ou encore Géoportail^{™} sans exclure toutefois d'autres applications similaires qui mettent à dispositions des données cartographiques ('Carto data' sur la figure 4). En pratique, on utilise les clichés satellites grâce auquel les rangs **1** sont visibles, comme illustré ou figure 1 et 2.

Comme illustré à la figure 2 on a matérialisé chacun des rangs d'un ensemble de rangs repéré 1, ainsi qu'une zone de travail repérée **8.**

Dans le cas où les rangs sont rectilignes, il suffit de pointer avec la souris de l'ordinateur la première extrémité et la deuxième extrémité d'un rang donné, de manière à enregistrer l'arpentage préliminaire pour le rang considéré. Si le rang en question n'est pas parfaitement rectiligne et légèrement courbe, l'enregistrement des deux positions d'extrémité suffit aussi dans le procédé proposé, car comme on le verra, sur le terrain réel le système de guidage de l'engin autonome a pour fonction de suivre le tracé du rang réel, même si le rang n'est pas rectiligne et présente une certaine courbure.

En revanche, si le rang présente une courbure prononcée, il est alors utile de pointer des positions intermédiaires pour faciliter le guidage ultérieur de l'engin autonome.

En réalité, la désignation (ou le pointage) avec la souris **91** peut être soumis à des aléas de précision, soit de la part de l'opérateur, soit de la définition insuffisante de l'écran **90,** soit en raison d'imperfection(s) de calage du cliché satellite par rapport à la localisation réelle des positions pointées.

On a illustré la figure 3 seulement quatre rangs exagérément petits pour la concision la clarté de l'exposé, on y voit que les positions pointées par la souris **91** sont représentées par des croix simples et ne coïncident pas parfaitement avec les positions réelles des extrémités de rang qui sont représentées par des ronds avec croix.

Ainsi l'arpentage préliminaire produit, pour le premier rang illustré, un segment **11p** qui s'étend de la première position pointée **21a** jusqu'à la deuxième position pointée **21b.** De même, un autre segment **12p** qui s'étend de la première position pointée **22a** jusqu'à la deuxième position pointée **22b,** un autre segment **13p** qui s'étend de la première position pointée **23a** jusqu'à la deuxième position pointée **23b** et encore un autre segment **14p** qui s'étend de la première position pointée **24a** jusqu'à la deuxième position pointée **24b.**

La figure 3 montre aussi les positions affinées d'extrémité (11a,11b) pour le premier rang 11, les positions affinées d'extrémité (12a, 12b) pour le deuxième rang 12, les positions affinées d'extrémité (13a,13b) pour le troisième rang 13, et les positions affinées d'extrémité (14a,14b) pour le quatrième rang 14. Les positions affinées d'extrémité sont déterminées après un parcours réel dans la parcelle comme il sera discuté plus loin.

L'ensemble des positions affinées d'extrémité, et éventuellement des points de passages affinés, forment un jeu de nouveaux points d'arpentage pour obtenir en sortie des deuxièmes données d'arpentage formant un arpentage fin (ARP2).

En revenant à l'arpentage préliminaire, la zone de travail délimitée repérée **8** est aussi déterminée par un pointage d'un certain nombre de points qui participent au contour de la zone de travail ; ce contour forme une ligne fermée dont la zone intérieure fait office de zone de travail et l'extérieur n'est pas autorisé pour faire évoluer l'engin autonome.

Il faut noter qu'il est possible d'avoir des zones d'exclusion à l'intérieur de la zone principale, la zone de travail contient alors des sous-zones interdites (par exemple le pylône ou poteau électrique, un arbre, une mare, ...).

En résumé, la désignation des points cartographiques forme des premières données d'arpentage **DARP1** à des fins de guidage ultérieur de l'engin autonome.

Selon un exemple particulier optionnel, les premières données d'arpentage sont corrigées par la connaissance des résultats d'arpentage antérieur des parcelles voisines. Dans ce cas, on applique un décalage général aux coordonnées obtenues ce qui forme un recalage et par conséquent les premières données d'arpentage sont alors déduites indirectement de la désignation des points sur la carte via l'outil informatique **9.**

On peut ainsi tirer parti des arpentages antérieurs pour faire bénéficier l'étape d'arpentage préliminaire de la parcelle d'intérêt de recalage bénéfique au guidage de l'engin autonome. Ceci est montré par la boucle de retour **BR** illustrée à la figure 12.

Le résultat du processus d'arpentage préliminaire prend la forme d'un fichier numérique **ARP1** qui contient principalement les données géolocalisées **DARP1** mais aussi les données contextuelles de cette opération à savoir la source de données cartographiques utilisée, la date et l'heure de la réalisation de l'opération d'arpentage préliminaire, et auxiliairement l'identité de la personne opérant ainsi que l'identité du matériel sur lequel a été réalisée l'opération.

On comprendra dans la suite que les données d'arpentage préliminaire sont essentiellement utilisées pour le guidage d'un engin autonome qui va parcourir réellement les rangs de la parcelle pour pratiquer un relevé cartographique géolocalisé appelé ici arpentage fin et qui pourra être utilisé ultérieurement à de multiples reprises par un engin du même type ou un engin d'un autre type.

Il faut remarquer que l'opération d'arpentage préliminaire peut être réalisée sur tout type d'appareil numérique 9 d'accès à une base cartographique de photos satellitaires. L'appareil numérique en question peut être par exemple un ordinateur ou un téléphone intelligent multifonction avec connectivité internet.

### Parcours de l'engin et relevé du réel

On fait parcourir, sur la base des premières données d'arpentage **DARP1,** les rangs de la parcelle par un engin autonome **2** introduit ci-avant. Comme il sera vu plus loin, l'engin autonome 2 parcourt tous les rangs l'un après l'autre.

Le capteur de détection de rang **7** peut prendre plusieurs formes, il peut s'agir par exemple d'un capteur lidar. En variante ou en complément, il peut s'agir aussi d'un dispositif d'imagerie, e.g. caméra dite «3D», ou caméra couleur multispectrale, ou encore tout autre moyen optique. Des capteurs de technologie à ultrasons peuvent aussi être utilisées en alternative ou en complément.

Le capteur de détection de rang peut détecter directement le rang par les contours de sa végétation ou par son empreinte au sol (plants, troncs, piquets de palissage, ...). Dans le cas d'un tracteur enjambeur, avantageusement les capteurs de détection **7** de type lidar se trouvent en surplomb de la végétation dans une zone de plan médian du tracteur comme ceci est illustré aux figures 6 à 8, et ont ainsi un champ de vision idéal et sans obstacle sur le rang de végétation **VG.** Les images ou clichés capturés par le capteur de détection peuvent être analysés par une unité de commande séparément ou dans une logique collective.

Plus précisément, une unité de commande discutée plus bas est en charge d'extraire d'un ou plusieurs clichés capturés la position des plants de végétation, ou alternativement une ligne correspondant à la ligne centrale LC reliant les différents plants de végétation les uns à la suite des autres.

Selon une possible implémentation, l'unité de commande traite une pluralité d'images de successives au fur et à mesure que l'engin enjambeur avance par rapport au rang de végétation, dans une logique similaire à une logique connu de SLAM (Simultaneous Localizatoin and Mapping). La détermination de la ligne centrale LC est alors plus robuste car elle repose sur une continuité d'images.,

Les procédés et systèmes de détection d'un rang de végétation sont généralement connus par ailleurs, et donc la fonction n'est pas décrite plus avant ici.

Le capteur de géolocalisation **5** est configuré pour recevoir des signaux d'une ou plusieurs constellations de satellites **50** incluant les constellations GPS, Glonass et Galileo. On utilise le terme **GNSS** (de l'anglais Global Navigation Satellite System) pour désigner génériquement tous ces systèmes de positionnement par satellites.

De préférence, le capteur de géolocalisation **5** est monté avec un axe **Z5** qui se trouve dans le plan médian longitudinal **PML** de l'engin 2.

Les signaux du système de positionnement par satellites peuvent être utilisés directement et sans autre artifice.

Toutefois, dans un cas intéressant, les signaux reçus des satellites **50** sont utilisés en combinaison avec des signaux de correction dit **DRTK** reçus par une liaison sans fil terrestre (de type téléphone cellulaire ou liaison radio spécifique). Les signaux de correction permettent de compenser certaines imprécisions induites par le parcours au travers de l'atmosphère terrestre des signaux depuis les satellites **50,** comme connu en soi et donc non décrit en détail ici. L'élaboration des signaux **DRTK** implique la présence de bornes stationnaires dont l'emplacement est connu avec précision, que ce soit une borne privée **55** (cf. Figure 5) ou une pluralité de bornes semi-publiques réparties sur une zone géographique aux alentours.

Pour mémoire le terme RTK, maintenant utilisé couramment dans le métier, vient de la locution en langue anglaise 'Real Time Kinematic'.

L'engin autonome peut s'engager sur le premier rang grâce aux coordonnées présente dans l'arpentage préliminaire.

Avantageusement, l'engin autonome parcourt tous les rangs de la parcelle réelle. Selon une solution pertinente, le parcours de l'engin autonome 2 parmi les rangs peut correspondre à la logique de la figure 11 dans cette configuration, deux rangs consécutivement parcourus ne sont pas physiquement adjacents.

Plus précisément sur l'exemple de la figure 11 l'engin autonome parcourt les rangs dans l'ordre suivant : T1, T4, T2, T5, T3, T6, T9, T7, T10, T8, T11, etc, le schéma précédent peut se répéter autant que nécessaire. On remarque que l'engin autonome fait demi-tour à l'extrémité de chaque rang, il n'y a pas de retour 'à vide'. Sur la figure 11, les rangs sont parcourus alternativement de la gauche vers la droite puis de la droite vers la gauche.

On vérifie que le nombre de rangs de la parcelle réelle correspond au nombre de rangs présents dans l'arpentage préliminaire. Une différence n'empêche pas l'arpentage fin d'être réalisé, mais cela peut signaler un problème dans l'arpentage préliminaire.

En référence à la figure 5, l'engin autonome **2** comprend un système de commande **3,** qui dans l'exemple illustré est un système de commande électrohydraulique. Le système de commande **3** comprend notamment une unité de commande **6** en charge de réaliser plusieurs fonctions, dont la fonction de suivi de rang et la fonction d'arpentage qui nous intéressent ici. L'unité de commande **6** comprend un calculateur électronique et peut comprendre optionnellement un bloc électrohydraulique en fonction de l'agencement fonctionnel des circuits hydrauliques.

On a choisi à titre d'exemple non limitatif le cas d'un pulvérisateur et dans ce cas l'engin autonome **2** comprend une cuve de liquide gauche **CVG** et une cuve de liquide droite **CVD,** Pour alimenter des buses de pulvérisation. On a aussi illustré notamment à la figure 8 la présence d'un outil de travail au sol repéré **36** qui peut être monté sur un système relevable, comme connu en soit donc non détaillé ici.

En référence à la figure 5, l'unité de commande **6** reçoit en entrée les signaux des satellites via le capteur de géolocalisation **5,** les signaux en provenance du ou des capteurs de détection de rang **7** et les signaux de correction le système de géolocalisation via une interface de communication cellulaire **62.** L'unité de commande **6** peut être en mesure de communiquer avec un serveur distant **66** et/ou avec l'appareil informatique **9** qui a été utilisé pour l'arpentage préliminaire.

En se tournant vers la figure 9, on va comprendre que grâce aux informations délivrées par le ou les capteur(s) de détection de rang **7,** l'unité de commande **6** peut déterminer un écart latéral ΔL de la position courante de l'engin **PRB** par rapport à une ligne centrale **LC** du rang.

La ligne centrale **LC** du rang est localement voisine d'une droite comme représenté à la figure 9, mais cela n'exclut pas une courbure générale du rang.

La ligne centrale **LC** du rang peut être déterminée par l'engin **2** à partir des informations délivrées par le capteur de détection de rang 7. La position moyenne de la végétation et ou des pieds des arbustes, telles que détectés par le ou les capteur(s) de détection de rang **7,** permet de déterminer où se trouve la ligne centrale **LC** du rang à cet endroit du tracé du rang, et ce par rapport à la structure de l'engin, notamment par rapport au plan médian longitudinal **PML.**

La détermination de la ligne centrale **LC** du rang par rapport à la structure de l'engin permet d'abord de contribuer au pilotage de l'engin par une boucle d'asservissement lorsque celui-ci est piloté de manière autonome. De plus, la détermination de la ligne centrale **LC** du rang par rapport à la structure de l'engin permet en outre de corriger la position géolocalisée collectée au moyen du capteur de géolocalisation, par exemple par projection comme il sera exposé ci-après.

Le procédé utilise un point d'origine de référence **CG** concernant le repère géométrique **X,Y,Z** de l'engin. De préférence, le point d'origine de référence **CG** se trouve dans le plan médian longitudinal **PML.** De préférence, le point d'origine de référence **CG** se trouve aussi sur l'axe **Z5** qui correspond à la position du capteur de géolocalisation **5.**

Sur la figure 9 on représenté les positions successives notées **PRB** du capteur de géolocalisation **5.** On constate que la trajectoire de ces points successifs **PRB** ne coïncide pas avec la ligne centrale **LC** du rang. Ceci est dû à la boucle d'asservissement du pilotage autonome (voire même le pilotage manuel). Or ce qui nous intéresse pour obtenir un arpentage fin des rangs de végétation, c'est la position **PRB ramenée** à la ligne centrale du rang.

La position géolocalisée courante projetée notée **PCJ** est construite par projection en projetant la géo-position courante du capteur de géolocalisation **PRB** sur la ligne centrale **LC** du rang.

La projection en question est réalisée soit en prenant le point le plus proche de PRB sur la ligne centrale **LC** du rang ou soit en projetant la géo-position courante du (PRB) perpendiculairement à la direction locale de ligne centrale (LC) du rang et en direction de la ligne centrale (LC).

Ainsi, l'unité de commande **6** construit une position géolocalisée courante projetée notée **PCJ** qui se trouve sur la ligne centrale **LC** du rang, pour en déduire un point de passage dit 'affiné' du tracé du rang.

La localisation précise du capteur de géolocalisation de l'engin autonome est connue en permanence via le GNSS RTK. L'engin autonome navigue via son capteur Lidar (ou autre capteur) et son contrôleur par rapport au rang parcouru. Le capteur de détection de rang donne en temps réel le décalage latéral Δ**L** avec le centre du rang. Ainsi, à chaque instant, on peut retrancher ce décalage Δ**L** à la localisation GNSS RTK pour obtenir le "véritable" centre du rang.

À partir des points de passage affinés, on pourra obtenir les deuxièmes données d'arpentage **DARP2.** Le mécanisme ci-dessus correspond à l'étape **C-** du procédé proposé. Le processus de suivi de rang grâce aux capteurs de suivi de rang correspond à l'étape **B-** du procédé proposé.

On remarque que le suivi de rang doit compenser tous les aléas du sol et du terrain sur lequel roule l'engin autonome. Il peut y avoir notamment une ou plusieurs zones humides voire boueuses qui peuvent occasionner des petites glissades des roues, il peut aussi y avoir des mottes de terre qui peuvent occasionner une déformation de pneu et un mouvement latéral. Il peut aussi y avoir une petite inclinaison de dévers. Tout cela concourt à l'impossibilité pour l'engin autonome de suivre parfaitement la ligne de trajectoire théorique, ce qui engendre en pratique l'écart latéral Δ**L** de position discuté plus haut. Toutefois cet écart latéral n'influe pas sur la précision des points relevés grâce au mécanisme de projection sur la ligne centrale **LC** décrit ci-dessus. En pratique, comme illustré à la figure 9, le trajectoire réelle **TJ52** de l'engin autonome, et accessoirement de son capteur de géolocalisation 5, ne coïncide pas avec une trajectoire idéale qui correspond au tracé de la ligne neutre, i.e. ligne centrale **LC** du rang. L'écart latéral Δ**L** peut aller au-delà de 10 cm voire même 20 cm, et pour autant le procédé promu va viser et obtenir une précision centimétrique sur le relevé du tracé du rang, avec une erreur de l'ordre du centimètre, bien en deçà de l'écart latéral Δ**L** constaté.

Pour obtenir des données d'arpentage fin synthétique, un certain nombre de points affinés **PCJ** collectés, notamment les géo-positionnement des bouts de rang (11a,11b,22a,22b) mais aussi les points de passage sont rassemblés dans un fichier numérique d'arpentage fin nommé **ARP2.**

Il est prévu en option dans l'engin autonome un écran graphique **4** avec des fonctions de restitution d'un certain nombre d'informations en temps réel lors du parcours de l'engin anthonome.

Comme visible à la figure 5, le système de commande **3** comprend des actuateurs ou actionneurs mis à contribution pour l'avancement et la maîtrise de la direction de l'engin, notamment des électrovannes **31, 32** et des moteurs **33, 34,** cette configuration est donnée à simple titre d'illustration simplifiée mais la personne du métier pourra l'adapter, mutatis mutandis, au cas de figure d'un engin quelconque.

Le système de commande **3** comprend également un ou plusieurs outils de travail **36,** par exemple pulvérisation ou travail du sol. Les outils de travail au sol sont relevés en bout de rang pour l'exécution du demi-tour et ils sont redescendus pour le parcours du rang suivant.

Les données d'arpentage préliminaire DARP1 peuvent être reçues par une communication sans fil ou alternativement elles peuvent être chargées via un port USB avec branchement physique sur l'unité de commande ou un de ses périphériques.

### Autres aspects et caractéristiques

Il faut remarquer que le relevé des positions géolocalisées par l'engin autonome au cours de son parcours dans les rangs permet de garantir des données d'arpentage en conformité avec la réalité, alors que l'arpentage préliminaire peut être entaché d'erreur, comme par exemple un cliché photographique satellite ancien qui ne reflète plus la réalité du jour. Avec l'option RTK pour le système de géolocalisation, la précision des données de 'arpentage fin est de l'ordre du centimètre, Ce qui permet d'envisager des travaux autonomes de précision sur les rangs de la parcelle.

Ainsi, le passage de l'engin dans tous les rangs garantit des deuxièmes données d'arpentage **DARP2** fidèles à la réalité.

Une fois que les données d'arpentage fin sont établies, celles-ci forment un fichier **ARP2** qui peut être remonté depuis l'unité de commande de l'engin autonome vers le serveur **66.** Le serveur **66** peut être le serveur propre à l'exploitation agricole ou viticole, ou peut être un serveur à un endroit quelconque dans le nuage informatique ('cloud').

Comme illustré à la figure 10, les première et deuxième données d'arpentage comprennent respectivement, pour chaque rang, une première position **PE1** relative à une première extrémité de rang, une deuxième position **PE2** relative à une deuxième extrémité de rang, et optionnellement un ou plusieurs points de passage **PPi** (i désigne ici un indice) à des positions intermédiaires sur le tracé du rang entre la première extrémité et la deuxième extrémité.

On remarque qu'il peut y avoir plus de points de passage **PPi** dans les deuxièmes données d'arpentage que dans les premières, en raison de la nécessité de fournir un tracé précis du rang pour pouvoir exécuter des travaux de précision sur la végétation.

En vue d'améliorer le processus d'arpentage préliminaire, comme déjà évoqué plus haut l'unité de commande de l'engin autonome peut relever l'écart entre une position réelle et la position correspondante donnée par les premières données d'arpentage. L'unité de commande peut enregistrer tous ces écarts et en faire une moyenne pour délivrer alors une information de correction (qui s'apparente à un offset général) repéré « écart moyen réel vs ARP1 » à la figure 12 (boucle de rétroaction **BR).**

Selon une fonction optionnelle additionnelle, il est prévu une prise en compte d'une éventuelle inclinaison latérale de l'engin, par exemple en raison d'un dévers du terrain. Cette information peut être captée par un inclinomètre par exemple. La distance qui sépare le capteur de géolocalisation du niveau du sol est multipliée par le sinus de l'angle d'inclinaison ce qui permet d'obtenir un offset latéral auxiliaire engendré par l'inclinaison de l'engin latéralement. Cet offset latéral auxiliaire vient s'ajouter ou se retrancher à l'écart latéral ΔL discuté plus haut, suivant le sens de l'inclinaison.

Au final, grâce à solution promue ici, un arpentage fin de la parcelle peut être obtenu de manière plus rapide et efficace que la solution connue dans l'art avec relevé 'manuel' des extrémités de rang. Cela permet notamment de mettre en œuvre des mises à jour plus fréquentes.

On notera par ailleurs que l'invention n'est pas limitée aux modes de réalisations décrits précédemment. Il apparaîtra en effet à l'homme du métier que diverses modifications peuvent être apportées aux modes de réalisations décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en œuvre de l'enseignement qui vient de lui être divulgué.

## Revendications

1. Procédé d'élaboration d'un arpentage fin d'une parcelle (99) plantée d'une pluralité de rangs (1) de végétation (VG), le procédé comprenant :
**A-** une étape **d'acquisition** d'un **arpentage préliminaire** (ARP1) à partir d'un appareil numérique (9), comprenant une désignation de points cartographiques depuis des données cartographiques, et en déduire, directement ou indirectement, des **premières données d'arpentage** à des fins de guidage, les premières données d'arpentage comprenant, pour chaque rang, une **première position** (21a) relative à une première extrémité de rang (PE1), et une deuxième position (21b) relative à une deuxième extrémité de rang (PE2),
**B-** une étape de **parcours,** dans laquelle on fait parcourir, sur la base des premières données d'arpentage, tous les rangs de la parcelle par un **engin autonome** (2), de préférence un engin enjambeur, équipé d'un capteur de géolocalisation (5) (GPS/GNSS) faisant partie d'un **système de géolocalisation** à précision **centimétrique,** et d'au moins un **capteur de détection de rang** (7) permettant de déterminer une localisation réelle d'une **ligne centrale** (LC) de rang par rapport à l'engin, le capteur de géolocalisation (5) étant de préférence agencé sur un plan médian longitudinal de l'engin autonome,
l'étape de parcours comprenant itérativement :
- relever une **géo-position** courante du capteur de géolocalisation (5), et simultanément déterminer une **position de la ligne centrale** (LC) par rapport à l'engin (PRB) et par rapport à son capteur de géolocalisation,
- déterminer une **position géolocalisée courante projetée** (PCJ) sur la ligne centrale (LC) du rang, pour en déduire des **points de passages affinés et géolocalisés** du tracé du rang,
**C-** déterminer, à partir des points de passages affinés (11a,11b), un jeu de nouveaux points d'arpentage pour obtenir en sortie des **deuxièmes données d'arpentage** formant **un arpentage fin** (ARP2) de la parcelle à des fins de travail de précision,
les deuxièmes données d'arpentage comprenant pour chaque rang au moins une première position affinée (11a) de la première extrémité de rang, une deuxième position affinée (11b) de la deuxième extrémité de rang.

2. Procédé selon la revendication 1, dans lequel les première et deuxième données d'arpentage comprennent, et optionnellement un ou **plusieurs points de passage** (PPi) à des positions intermédiaires sur le tracé du rang entre la première extrémité (PE1) et la deuxième extrémité (PE2).

3. Procédé selon l'une des revendications 1 à 2, dans lequel les première et deuxième données d'arpentage comprennent une délimitation d'une **zone de travail** (92) qui englobe la pluralité des rangs et définit une **frontière extérieure** d'évolution pour l'engin autonome (2).

4. Procédé selon la revendication 3, dans le lequel lors de l'étape de parcours par l'engin autonome, on définit le cas échéant une ou plusieurs restrictions et/ou modifications de la zone de travail (92) délimitant une frontière extérieure d'évolution pour l'engin autonome (2) par exemple en réponse à une détection d'obstacle.

5. Procédé selon l'une des revendications 1 à 4, comprenant en outre, pour chaque point d'arpentage de l'arpentage préliminaire (ARP1), une **comparaison** de la **position acquise** en **temps réel** par rapport à une position estimée obtenue à partir des premières données d'arpentage.

6. Procédé selon l'une des revendications 1 à 5, dans le lequel lors de l'étape de parcours par l'engin autonome, deux rangs consécutivement parcourus ne sont **pas physiquement adjacents.**

7. **Système** d'élaboration d'un arpentage fin d'une parcelle (99) plantée d'une pluralité de rangs (1) de végétation (VG), comprenant :
- un appareil numérique (9) d'accès à une base cartographique, notamment de photos satellitaires, incluant par exemple un ordinateur ou un téléphone intelligent multifonction, un arpentage préliminaire (ARP1) pouvant être réalisé hors ligne à partir dudit appareil numérique,
- un engin autonome (2) de préférence un engin enjambeur, équipé d'un capteur de géolocalisation (5) (GPS/GNSS) faisant partie d'un **système de géolocalisation** à précision **centimétrique,** et d'au moins un capteur de détection de rang,
l'engin autonome comprenant au moins une unité de commande (6) configurée pour :
- acquérir des premières données de guidage issues d'une étape préalable d'acquisition d'un arpentage préliminaire (ARP1) depuis l'appareil numérique (9) d'accès à une base cartographique, les premières données d'arpentage comprenant, pour chaque rang, une **première position** (21a) relative à une première extrémité de rang (PE1), une deuxième position (21b) relative à une deuxième extrémité de rang (PE2),
- collecter, en parcourant tous les rangs de la parcelle (99), des deuxièmes données d'arpentage issues de la détermination d'une ligne centrale du rang à partir du (ou des) capteur(s) de détection de rang, de la détermination simultanée de la géoposition courante du capteur de géolocalisation (5) de l'engin (PRB),
l'unité de commande (6) étant configurée pour établir des deuxièmes données d'arpentage formant un arpentage fin, les deuxièmes données d'arpentage comprenant pour chaque rang, au moins une première position affinée (11a) de la première extrémité de rang, une deuxième position affinée (11b) de la deuxième extrémité de rang.

8. Système selon la revendication 7, dans lequel l'engin autonome est un engin automoteur enjambeur, et présente un plan médian longitudinal (PML) et le capteur de géolocalisation (5) se trouve dans le plan médian longitudinal (PML) de l'engin.

9. Système selon l'une des revendications 7 à 8, dans lequel le au moins un capteur détection de rang (7) comprend un capteur **Lidar.**

10. Système selon l'une des revendications 7 à 9, faisant appel à un système de géolocalisation à précision améliorée utilisant des correctifs de coordonnées dits **DRTK.**
